# EUROPÄISCHE PATENTSCHRIFT

(11) **EP 3 057 036 B1**
(45) Veröffentlichungstag und Bekanntmachung des Hinweises auf die Patenterteilung: **09.04.2025**
(21) Anmeldenummer: 16152021.8
(22) Anmeldetag: 20.01.2016
(51) Int. Cl.: G08G 1/0962, G08G 1/0967, G08G 1/00

(54) **VORRICHTUNG UND VERFAHREN ZUR BESCHLEUNIGUNG EINES FAHRZEUGS BEIM START AN EINER LICHTZEICHENANLAGE**
DEVICE AND METHOD FOR ACCELERATING A VEHICLE AT START AT A LIGHT SIGN ASSEMBLY
DISPOSITIF ET PROCÉDÉ D'ACCÉLÉRATION D'UN VÉHICULE AU DÉMARRAGE A UN FEU DE CIRCULATION

(30) Priorität: 11.02.2015 DE 102015202451
(43) Veröffentlichungstag der Anmeldung: 17.08.2016
(73) Patentinhaber: Volkswagen Aktiengesellschaft, 38440 Wolfsburg (DE)
(72) Erfinder: Pascheka, Patrick, 2582 EN Den Haag (NL); Kleinau, Sandra, 38531 Rötgesbüttel (DE)

(56) Entgegenhaltungen:
- EP-A1- 2 903 878
- WO-A1-2013/034729
- DE-A1- 102011 081 609
- DE-A1- 102012 202 110
- DE-A1- 102014 203 988
- DE-T5- 112012 001 799
- US-B1- 8 478 500

## Beschreibung

### Stand der Technik

Die vorliegende Erfindung betrifft ein Fortbewegungsmittel, eine Vorrichtung sowie ein Verfahren zur Beschleunigung eines Fahrzeugs bei einem Start an einer Lichtzeichenanlage. Insbesondere betrifft die vorliegende Erfindung eine möglichst komfortable und energieeffiziente Durchführung eines Ampelstarts mit einem Elektronische-Deichsel-System.

Abstandsregelsysteme gehören zum Stand der Technik und sind mittlerweile in vielen Fahrzeugen verfügbar. Ferner können diese Systeme (sog. Stop-and-go-Systeme) mitunter bis in den Stand abbremsen und aus dem Stand wieder anfahren. Beim automatischen Anfahren an einer Ampel hängt die Anzahl der Fahrzeuge, die während einer Grünphase über die Ampel kommen, unter anderem davon ab, wie zügig diese anfahren. Je geringer die Beschleunigung und je größer die Reaktionszeiten, desto weniger Fahrzeuge können bei einer gegebenen Grünphasendauer die Ampel passieren. Vor diesem Hintergrund kann eine sogenannte "elektronische Deichsel" hilfreich sein, da sie ein (beinahe) gleichzeitiges Beschleunigen nachfolgender Fahrzeuge mit verkürzten Abständen ermöglicht, wobei die von bereits im Serieneinsatz befindlichen Systemen realisierten Sicherheitsabstände deutlich unterschritten werden. Genau diese Sicherheitsabstände führen zu für die Querung der Lichtzeichenanlage ungenutzten Zeitfenstern. Wird eine im Stand der Technik bekannte elektronische Deichsel jedoch auf sämtliche der an der Lichtzeichenanlage wartenden Fahrzeuge angewendet, muss ein Fahrer, dessen Fahrzeug die Grünphase nicht nutzen kann, manuell die elektronische Deichsel zu seinem Vordermann lösen und sein Fahrzeug vor dem Passieren der Ampel abbremsen. Bis zu diesem Zeitpunkt hat sein Fahrzeug jedoch eine erhebliche Geschwindigkeit erreicht, wodurch ein abruptes Abbremsen und ein Vergeuden kinetischer Energie die Folge ist.

DE 10 2009 042 923 A1 offenbart ein Fahrerassistenzsystem, welches eine Optimierung von Bewegungsparametern eines Kraftfahrzeugs bei der Anfahrt auf eine Verkehrssignalanlage durchführt. Die aktuellen Bewegungsparameter, ein verbleibender Abstand zur Verkehrssignalanlage und etwaige zwischen dem Fahrzeug und der Verkehrssignalanlage befindliche Fahrzeuge werden ebenso wie deren Bewegungsparameter berücksichtigt, um ein möglichst beschleunigungsarmes Anfahren der Verkehrssignalanlage durchzuführen und somit einen bestmöglichen Anwenderkomfort und geringstmögliche Aufwendung energetischer Ressourcen zu erzielen.

DE 10 2012 202 110 A1 offenbart ein Abstands- und Geschwindigkeitsregelsystem für Kraftfahrzeuge, bei welchem ein automatisches Anfahren aus dem Stand und Abbremsen bis zum Stand vorgesehen ist. Um die Kenntnis darüber, dass bevorstehende Grünphasen nicht zum Passieren einer Ampel verwendet werden können, zu nutzen, wird vorgeschlagen, dass lediglich dann mit hoher Dynamik angefahren wird, wenn die Wahrscheinlichkeit, dass die Ampel innerhalb eines aktuellen bzw. bevorstehenden Zyklus überquert werden kann, vergleichsweise hoch ist. Andernfalls kann mit geringerer Dynamik angefahren werden, um den Anwenderkomfort zu erhöhen und den Einsatz energetischer Ressourcen zu verringern.

WO 2013/034729 A1 zeigt ein Verfahren zum Steuern eines Energieverteilungsprozesses in einem Fahrzeug, bei welchem C2C-Kommunikation und C2X-Kommunikation verwendet wird, um die Informationslage bezüglich einer Verkehrssituation zu verbessern und in Abhängigkeit der Informationslage eine vorausschauende Steuerung der Energieflüsse in Energiespeichern eines Fortbewegungsmittels vorzunehmen.

DE 10 2011 081 609 A1 offenbart ein Verfahren zur Bewertung einer Annäherungssituation eines Fahrzeugs an eine Lichtsignalanlage, bei welchem die Anzahl sich zwischen dem Fahrzeug und der Lichtsignalanlage befindlicher Fremdfahrzeuge sowie Positionsdaten bezüglich des Fahrzeugs und der Lichtsignalanlage verwendet werden, um eine Annäherungsgeschwindigkeit des Fortbewegungsmittels zur Erreichung einer hohen Energieeffizienz anzupassen.

US 8 478 500 B1 offenbart ein System und ein Verfahren zum Verwenden von Car2X Kommunikation zur Erhöhung von Effizienz und mittlerer Reisegeschwindigkeit an Lichtzeichenanlagen.

Eine elektronische Deichsel kann ein zügiges Anfahren einer Fahrzeugkolonne ermöglichen und durch eine hohe Fahrzeugdichte den Verkehrsfluss über Kreuzungen optimieren. Ein solches Verfahren ist jedoch nur für eine bestimmte Anzahl von Fahrzeugen sinnvoll: Neben dem ersten Fahrzeug wird vermutlich auch das zweite Fahrzeug der Kolonne vor einer Ampel in derselben Grünphase über die Ampel fahren können. Fraglich ist dies jedoch zumindest für ein zehntes Fahrzeug innerhalb der Kolonne. Fährt nun dieses zehntes Fahrzeug ebenfalls mit einer elektronischen Deichsel gekoppelt hinter einem neunten Fahrzeug her, und schafft es zwar dieses neunte Fahrzeug, bei derselben Grünphase wie das erste Fahrzeug über die Ampel zu fahren, nicht jedoch das zehnte Fahrzeug, führt dies zu einem unkomfortablen Bremseingriff im zehnten Fahrzeug, sofern nicht rechtzeitig erkannt wird, dass ein Passieren der Ampel für das zehnte Fahrzeug nicht während derselben Grünphase möglich ist. Da das zehnte Fahrzeug unnötig beschleunigt wurde und die kinetische Energie beim Anhalten an der Ampel bestenfalls teilweise rekuperiert wird, hätte ein moderates Beschleunigungsmanöver bzw. ein "Kriechen" an die Ampel den Energiebedarf erheblich senken können. Vor diesem Hintergrund ist es eine Aufgabe der vorliegenden Erfindung, ein verbessertes Verfahren zum Kolonnenstart an einer Ampel zu schaffen.

### Offenbarung der Erfindung

Die vorstehend genannte Aufgabe wird erfindungsgemäß durch ein Verfahren zur Beschleunigung eines Fahrzeugs bei einem Kolonnenstart an einer Lichtzeichenanlage gelöst. Unter einem "Kolonnenstart" sei im Rahmen der vorliegenden Erfindung ein automatisiert unterstützter, teil- oder vollautomatischer Anfahrvorgang einer Vielzahl von Fahrzeugen verstanden, welcher insbesondere unter erheblicher Unterschreitung eines für die manuelle oder sensorbedingte Einhaltung eines Sicherheitsabstandes zum Vordermann erfolgt. Ein solcher automatisierter Kolonnenstart kann beispielsweise durch ein Elektronische-Deichsel-System unterstützt oder durchgeführt werden, bei welchem Fahrdynamikparameter eines vorausfahrenden Fahrzeugs in drahtloser Form an ein nachfolgendes Fahrzeug gesendet werden, um auch das nachfolgende Fahrzeug mit ähnlichen oder identischen Fahrdynamikparametern (zumindest zeitweise) längszuführen. In einem ersten Schritt wird eine Wahrscheinlichkeit ermittelt, dass ein vordefiniertes Fahrzeug (auch "Ego-Fahrzeug") während einer aktuellen oder bevorstehenden Grünphase die Lichtzeichenanlage passieren kann. Die Wahrscheinlichkeit kann beispielsweise in Abhängigkeit einer Distanz zu der Lichtzeichenanlage ermittelt werden. Hierbei kann a priori Wissen über die Schaltzeiten der Lichtzeichenanlage verwendet und/oder von der Lichtzeichenanlage gesendete Drahtlossignale im Fahrzeug ausgewertet werden. In einem zweiten Schritt wird das Fahrzeug entsprechend einem Signal eines Elektronische-Deichsel-Systems beschleunigt, sofern die Wahrscheinlichkeit höher als ein vordefinierter Schwellenwert ist. Mit anderen Worten wird das Fahrzeug über eine elektronische Deichsel gekoppelt in Richtung der Lichtzeichenanlage geführt. Sofern jedoch die Wahrscheinlichkeit geringer als der vordefinierte Schwellenwert ist, also ein Passieren der Lichtzeichenanlage im Zuge einer aktuellen oder bevorstehenden Grünphase unwahrscheinlich ist, wird das Fahrzeug in geringerem Maße beschleunigt und energie- und komfortoptimiert an die Lichtzeichenanlage herangeführt.

Sofern mehrere vorausfahrende Fahrzeuge Signale eines Elektronische-Deichsel-Systems senden und diese Signale von dem Ego-Fahrzeug empfangen werden, kann bei unterschiedlichen Inhalten der Signale das Ego-Fahrzeug entsprechend einem solchen Signal beschleunigt werden, welches eine geringste Beschleunigung repräsentiert. Dies erfolgt unter der Voraussetzung, dass die Wahrscheinlichkeit für ein erfolgreiches Passieren der Lichtzeichenanlage in einem aktuellen oder bevorstehenden Ampelzyklus höher als ein vordefinierter Schwellenwert ist. Auf diese Weise wird berücksichtigt, dass die geringste Beschleunigung der vorausfahrenden Fahrzeuge letztendlich maßgeblich für eine maximale Beschleunigung des Ego-Fahrzeugs ist, sofern eine Kollision vermieden werden soll. Alternativ können die mehreren Signale des Elektronische-Deichsel-Systems vorausfahrender Fahrzeuge gemittelt werden, um eine Anpassung eines zunächst geringen Beschleunigungswertes auf einen höheren Beschleunigungswert zu antizipieren und eine möglichst gleichmäßige Beschleunigung für das Ego-Fahrzeug zu realisieren.

Die Unteransprüche zeigen bevorzugte Weiterbildungen der Erfindung.

Die Wahrscheinlichkeit dafür, dass ein vordefiniertes Fahrzeug während einer aktuellen oder bevorstehenden Grünphase die Lichtzeichenanlage passieren kann, kann unter Verwendung einer Vielzahl möglicher Informationen ermittelt werden. Diese können einzeln, bevorzugt jedoch in Kombination miteinander, verwendet werden. Beispielsweise kann eine Dauer bis zu einem Ende der aktuellen oder bevorstehenden Grünphase ermittelt werden. Diese Dauer bildet die Grundlage dafür, ob die übrigen Umstände der Verkehrssituation ein erfolgreiches Passieren der Lichtzeichenanlage während der Grünphase erlauben. Einerseits spielt die Entfernung des vordefinierten Fahrzeugs von der Lichtzeichenanlage eine Rolle und kann sensorisch und/oder über ein Drahtlossignal und/oder über ein Ortungssystem in Kombination mit einer digitalen Straßenkarte ermittelt werden. Ebenso spielt die Anzahl zwischen dem vordefinierten Fahrzeug und der Lichtzeichenanlage wartender Fahrzeuge eine Rolle. Hierbei können insbesondere die auf derselben Fahrspur wie das Ego-Fahrzeug fahrenden Fahrzeuge berücksichtigt und eine Kenngröße für deren Anzahl ermittelt bzw. empfangen werden. Hilfreich können die Signale eines Umgebungssensors (z. B. ein optischer Sensor) des vordefinierten Fahrzeugs sein, mittels welchem beispielsweise die vorgenannte Entfernung zur Lichtzeichenanlage (einer bekannten/genormten Größe) und/oder die Kenngröße für die Anzahl wartender Fahrzeuge ermittelt werden können. Auch Signale eines Elektronische-Deichsel-Systems eines oder mehrerer zwischen dem vordefinierten Fahrzeug und der Lichtzeichenanlage wartenden Fahrzeugs bzw. Fahrzeuge können Aufschluss darüber geben, wie schnell die vorausfahrenden Fahrzeuge beschleunigen und wie schnell entsprechend ein Erreichen der Lichtzeichenanlage noch möglich ist, bevor das bevorstehende Ende der aktuellen Grünphase ein Abbremsen des Ego-Fahrzeugs erforderlich macht. Zudem kann ermittelt werden, ob eines der vorausfahrenden Fahrzeuge durch Aktivieren eines Fahrtrichtungsanzeigers ein Abbiegevorhaben signalisiert. Da ein Abbiegevorhaben ein Ausscheren aus einem elektronische-Deichsel-Verbund bedeutet und mitunter Wartezeiten für das Gewähren vorfahrtberechtigter weiterer Verkehrsteilnehmer bedingt, kann die Wahrscheinlichkeit für ein erfolgreiches Überqueren der Lichtzeichenanlage in der aktuellen Grünphase automatisch verringert werden, um ein unnötiges Beschleunigen des Ego-Fahrzeugs zu vermeiden. Schließlich kann eine Abbiegeoption bzw. die Erlaubnis eines Abbiegevorgangs auf einer durch das vordefinierte Fahrzeug befahrenen Spur ermittelt werden. Beispielsweise kann dies durch Erfassen von Verkehrszeichen mittels eines optischen Sensors erfolgen. Auf diese Weise wird auch ohne ein bereits signalisiertes tatsächliches Abbiegevorhaben eines vorausfahrenden Fahrzeugs in Betracht gezogen, dass vorausfahrende Fahrzeuge zum Zwecke des Abbiegens aus dem elektronischen-Deichsel-Verbund ausbrechen und zusätzliche Wartezeiten für den nachfolgenden Verkehr bedingen. Das Ermitteln des Abbiegevorhabens sowie das Ermitteln der bestehenden Abbiegeoptionen können ebenfalls über Umgebungssensoren des Ego-Fahrzeugs und/oder über Auswertung von Drahtlossignalen erfolgen.

Insbesondere können die unterschiedlichen Beschleunigungen gewichtet werden, sodass die Beschleunigung eines unmittelbar vorausfahrenden Fahrzeugs ein höheres Gewicht erhält als ein weiter vorausfahrendes Fahrzeug. Sofern die Beschleunigung des unmittelbar vor dem Ego-Fahrzeug befindlichen Fahrzeugs jedoch die Beschleunigung eines oder mehrerer vor ebendiesem Fahrzeug befindlicher Fahrzeuge überschreitet, kann auch eine höhere Gewichtung der niedrigeren Beschleunigung erfolgen. Auch dieser Schritt erfolgt unter der Voraussetzung, dass die Wahrscheinlichkeit für ein erfolgreiches Queren der Lichtzeichenanlage in einem aktuellen oder bevorstehenden Ampelzyklus höher als der vordefinierte Schwellenwert ist.

Das Beschleunigen des Fahrzeugs erfolgt bevorzugt aus dem Stand. Mit anderen Worten ist das erfindungsgemäße Verfahren als eine Kolonnenstartunterstützung aus dem Stand zu verstehen. Beispielsweise beginnt das erfindungsgemäße Verfahren in einer solchen Situation, in welcher hintereinander an der Lichtzeichenanlage wartende Fahrzeuge einen geringsten Abstand zueinander aufweisen. Naturgemäß ist das erfindungsgemäße Verfahren nicht dafür vorgesehen, eine geringstmögliche Beschleunigung bei der Anfahrt auf eine Lichtzeichensignalanlage zu realisieren, sondern nach Möglichkeit eine größtmögliche Beschleunigung beim Anfahren an einer Lichtzeichenanlage zur erfolgreichen Überquerung ebendieser durch möglichst viele Fahrzeuge zu unterstützen und andernfalls eine geringere Beschleunigung derart durchzuführen, dass etwaig nachfolgender Verkehr zumindest keine Überholmanöver unternimmt, um einen Warteplatz vor dem Ego-Fahrzeug an der Lichtzeichenanlage zu erlangen. Jedoch soll ein möglichst geringer Energieverbrauch und ein komfortables Beschleunigungsverhalten realisiert werden, wie es der Fahrer des Ego-Fahrzeugs auch ohne automatische Längsführung manuell herstellen würde.

Die Dauer der aktuellen oder bevorstehenden Grünphase kann beispielsweise in Form eines von der Lichtzeichenanlage stammenden Signals an das Ego-Fahrzeug übertragen werden. Alternativ oder zusätzlich kann eine fahrzeugbasierte Datenbank Informationen über das Schaltverhalten der Lichtzeichenanlage bereitstellen und beispielsweise in Kombination mit einem optischen Sensor zur Erfassung eines Umschaltmomentes der Lichtzeichenanlage verwendet werden, um ein erneutes (zukünftiges) Umschalten der Lichtzeichenanlage abzuschätzen und somit die Informationen der Datenbank zu synchronisieren.

Bevorzugt wird im Rahmen der vorliegenden Erfindung also in einem ersten Schritt eine Schätzung über eine Anzahl von Fahrzeugen durchgeführt, die sich auf dem aktuell befahrenen Fahrstreifen zwischen einer Lichtzeichenanlage und einem eigenen Fahrzeug befinden. Anschließend wird in Abhängigkeit der Fahrzeuganzahl bzw. der Rückstaulänge und der Anzahl und ggf. Anordnung erfindungsgemäß ausgestatteter Fahrzeuge sowie in Abhängigkeit der Information über die Länge einer Grünphase der angefahrenen Lichtzeichenanlage eine Bewertung dahingehend durchgeführt, ob ein zügiges Anfahren als erster Beschleunigungsmodus oder ein normales Anfahren als ein zweiter Beschleunigungsmodus ausgewählt werden soll. Dabei kann der erste Modus insbesondere dadurch gekennzeichnet sein, dass die Beschleunigung eines unmittelbar vorausfahrenden Fahrzeugs, welches über eine Vorrichtung zur Fahrzeug-zu-Fahrzeug-Kommunikation (V2V) an das eigene Fahrzeug übermittelt wird, zur Vorsteuerung einer Abstandsregelung Verwendung findet und ein nahezu zeitgleiches Anfahren ermöglicht. Auf diese Weise wird das Fahrzeug beim Losfahren des vorausfahrenden Fahrzeugs diesem automatisch folgen, wobei die Beschleunigung des eigenen Fahrzeugs davon abhängt, ob der erste Modus oder der zweite Modus aktiv ist.

Gemäß einem zweiten Aspekt der vorliegenden Erfindung wird eine Vorrichtung zur Beschleunigung eines Fahrzeugs an einer Lichtzeichenanlage vorgeschlagen. Die Vorrichtung umfasst eine Auswerteeinheit, welche in Form eines elektronischen Steuergerätes vorgesehen sein kann. Die Auswerteeinheit umfasst einen programmierbaren Prozessor und/oder einen Nanocontroller und/oder einen Microcontroller. Eine Empfangseinheit ist zur Wandlung drahtlos empfangener Signale eines anderen Fahrzeugs und/oder einer Lichtzeichenanlage vorgesehen. Die Empfangseinheit kann weiter einen optischen Sensor umfassen, über welchen Signale eines Fahrtrichtungsanzeigers eines vorstehenden Fahrzeugs und/oder Verkehrszeichen und/oder entsprechende Lichtzeichenanlagen zur Ermittlung von Abbiegeoptionen erfasst und ausgewertet werden können. Schließlich ist auch ein Aktuator vorgesehen, welcher zur Längsführung des Fortbewegungsmittels eingerichtet ist. Die Auswerteeinheit ist eingerichtet, über die Empfangseinheit empfangene Signale auszuwerten und eine Wahrscheinlichkeit dafür, dass ein vordefiniertes Fahrzeug während einer aktuellen oder bevorstehenden Grünphase die Lichtzeichenanlage passieren kann, zu ermitteln. Die Art und Weise, in welcher der Aktuator die Längsführung (das Beschleunigungsverhalten) des Ego-Fahrzeugs steuert, entspricht demjenigen, welches in Verbindung mit dem erfindungsgemäßen Verfahren bereits beschrieben worden ist. Entsprechend führt der Aktuator das Fahrzeug entsprechend einem Signal eines Elektronische-Deichsel-Systems für den Fall einer hohen Wahrscheinlichkeit für ein erfolgreiches Queren der Lichtzeichenanlage während einer aktuellen Grünphase und erhöht den Anwenderkomfort bzw. senkt den Energiebedarf zur Längsführung des Fahrzeugs für den Fall einer geringen Wahrscheinlichkeit zur Querung der Lichtzeichenanlage.

Die Empfangseinheit kann zur Ermittlung der Wahrscheinlichkeit eingerichtet sein, eine Dauer bis zu einem Ende der aktuellen oder bevorstehenden Grünphase zu ermitteln und/oder eine Entfernung des vordefinierten Fahrzeugs von der Lichtzeichenanlage und/oder eine Kenngröße für eine Anzahl zwischen dem vordefinierten Fahrzeug und der Lichtzeichenanlage wartender Fahrzeuge zu ermitteln. Alternativ oder zusätzlich kann die Empfangseinheit ein Signal eines Umgebungssensors des vordefinierten Fahrzeugs auswerten und/oder ein Signal eines Elektronische-Deichsel-Systems eines oder mehrerer zwischen dem vordefinierten Fahrzeug und der Lichtzeichenanlage wartenden Fahrzeugs bzw. Fahrzeuge auszuwerten. Die Empfangseinheit kann alternativ oder zusätzlich eingerichtet sein, ein Abbiegevorhaben eines zwischen dem vordefinierten Fahrzeug und der Lichtzeichenanlage befindlichen Fahrzeugs zu ermitteln und alternativ oder zusätzlich Abbiegeoptionen auf einer durch das vordefinierte Fahrzeug aktuell befahrenen Spur zu ermitteln. Wie in Verbindung mit dem erfindungsgemäßen Verfahren ausgeführt, können die bestehenden Abbiegeoptionen auf einer durch das vordefinierte Fahrzeug aktuell befahrenen Spur bei einer Auswertung eines Abbiegevorhabens (z. B. mittels eines Fahrtrichtungsanzeigers angezeigt) eines zwischen der Lichtzeichenanlage und dem vordefinierten Fahrzeug wartenden Fahrzeugs berücksichtigt werden. Insbesondere ist vorgesehen, dass für den Fall, dass das Abbiegevorhaben auf ein Manöver schließen lässt, welches für die aktuelle Spur nicht vorgesehen/erlaubt ist, davon ausgegangen wird, dass der Fahrer des vorausfahrenden Fahrzeugs mit Abbiegewunsch seinen Irrtum kurzfristig erkennt, das Abbiegevorhaben abbricht und daher im Elektronische-Deichsel-Verbund bleibt.

Gemäß einem dritten Aspekt der vorliegenden Erfindung wird ein Computerprogramm-Produkt vorgeschlagen, welches Instruktionen umfasst, welche, wenn sie auf einer programmierbaren Auswerteeinheit einer Vorrichtung gemäß dem zweitgenannten Erfindungsaspekt ausgeführt werden, die Auswerteeinheit veranlassen, die Schritte eines Verfahrens gemäß dem erstgenannten Erfindungsaspekt durchzuführen. Das Computerprogramm-Produkt kann als CD, DVD, BlueRay-Disc, Flash-Speicher, Festplatte, RAM/ROM, Cache etc. ausgestaltet sein.

Gemäß einem vierten Aspekt der vorliegenden Erfindung wird eine Signalfolge repräsentierend Instruktionen vorgeschlagen, welche, wenn sie auf einer programmierbaren Auswerteeinheit einer Vorrichtung gemäß dem zweitgenannten Erfindungsaspekt ausgeführt werden, die Auswerteeinheit veranlassen, die Schritte eines Verfahrens gemäß dem erstgenannten Erfindungsaspekt durchzuführen. Auf diese Weise wird auf die informationstechnische Bereitstellung der Instruktionen für den Fall unter Schutz gestellt, dass sich die dazu erforderlichen Speichermittel außerhalb des Geltungsbereiches der beigefügten Ansprüche befinden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung einer Verkehrssituation an einer Lichtzeichenanlage;
- Figur 2: eine schematische Darstellung zweier Fahrzeuge bei einem Kolonnenstart an einer Lichtzeichenanlage, wobei Komponenten einer erfindungsgemäßen Vorrichtung dargestellt sind; und
- Figur 3: ein Flussdiagramm veranschaulichend Schritte eines Ausführungsbeispiels eines erfindungsgemäßen Verfahrens.

### Ausführungsformen der Erfindung

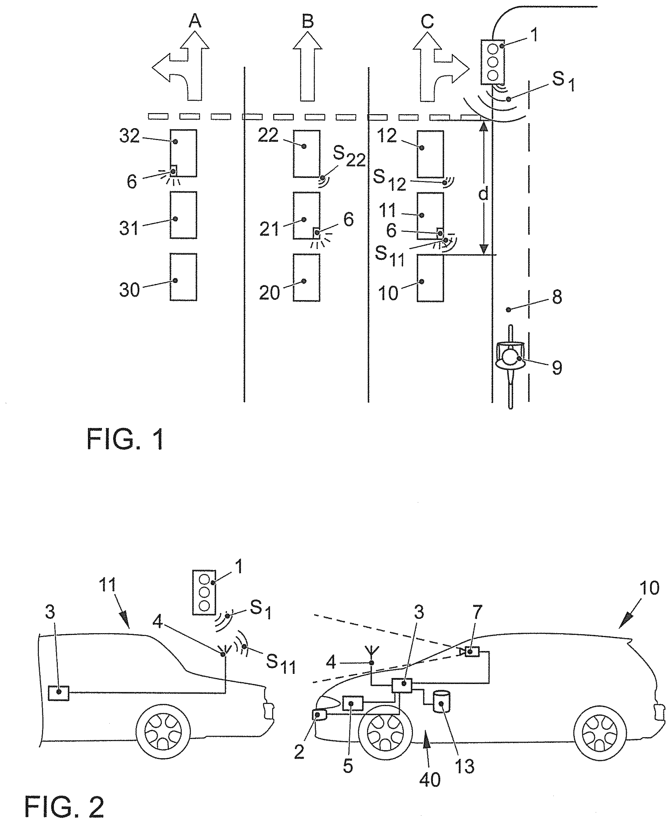

Fig. 1 zeigt ein beispielhaftes Szenario, in dem das erfindungsgemäße Verfahren zur Anwendung kommen kann. Unmittelbar vor dem eigenen Fahrzeug 10 befinden sich auf dem Fahrstreifen C zwei Fahrzeuge 11, 12, welche jeweils mit einer Vorrichtung zur Fahrzeug-zu-Fahrzeug-Kommunikation sowie zur Durchführung eines Kolonnenstarts mittels einer elektronischen Deichsel ausgestattet sind. Hierzu senden das Fahrzeug 11 ein Drahtlossignal S₁₁ und das Fahrzeug 12 ein Drahtlossignal S₁₂ an das Ego-Fahrzeug 10. Durch einen Fahrtrichtungsanzeiger 6 gibt das Fahrzeug 11 zudem bekannt, dass es einen (erlaubten) Abbiegevorgang nach rechts beabsichtigt. Zwischen der Lichtzeichenanlage 1 und dem Ego-Fahrzeug 10 besteht ein Abstand d, welcher mittels eines (nicht dargestellten) Umgebungssensors und mithilfe einer Ortungslösung in Kombination mit einer digitalen Straßenkarte des Ego-Fahrzeugs 10 ermittelt wird. Ein Drahtlossignal S₁ von der Lichtzeichenanlage 1 teilt den Fahrzeugen 10, 11, 12, 20, 21, 22, 30, 31, 32 mit, wann die nächste Grünphase beginnen und wann sie enden wird. Das bevorstehende Abbiegevorhaben des Fahrzeugs 11 senkt die Wahrscheinlichkeit dafür, dass das Fahrzeug 10 die bevorstehenden Grünphase nutzen kann, da ein auf einem Radweg 8 herannahender Radfahrer 9 Vorfahrt gegenüber dem Fahrzeug 11 hat und somit eine gewisse Wartezeit bis zum erfolgreichen Abbiegen des Fahrzeugs 11 bedingt. Auf einem mittleren Fahrstreifen B ist lediglich die Geradeausfahrt vorgesehen und erlaubt. Entsprechend kann ein Fahrzeug 20 davon ausgehen, dass das Fahrzeug 21 den mittels des Fahrtrichtungsanzeigers 6 kundgetanen Abbiegewunsch rechtzeitig einstellen und die Geradeausfahrt fortsetzt. Lediglich das erste auf dem Fahrstreifen B wartende Fahrzeug 22 sendet ein elektronische-Deichsel-Signal S₂₂ an die nachfolgenden Fahrzeuge 20, 21, sodass lediglich das Fahrzeug 21 sicher an das Fahrzeug 22 gekoppelt werden kann. Für das Fahrzeug 20 kommt eine solche Kopplung bereits deshalb nicht in Frage, da das Fahrzeug 21 die Kopplung beispielsweise aufgrund des Abbiegewunsches auflösen und daher eine geringere Beschleunigung als das Fahrzeug 22 erfordern könnte. Die Fahrzeuge 30, 31, 32 tauschen keine Drahtlossignale eines Elektronische-Deichsel-Systems aus und müssen voraussichtlich aufgrund des Abbiegewunsches des Fahrzeugs 32 erhebliche Wartezeit in Kauf nehmen, was ein erfolgreiches Passieren der Lichtzeichenanlage 1 unwahrscheinlich macht.

Fig. 2 zeigt Komponenten eines erfindungsgemäß ausgestalteten PKWs 10 als Fortbewegungsmittel sowie eines vorausfahrenden PKWs 11, welcher von einer Auswerteeinheit 3 und über eine Drahtlossendeeinheit 4 erzeugte Drahtlossignale S₁₁ an den PKW 10 aussendet, um diesem die Möglichkeit zu geben, eine elektronische Deichsel zu aktivieren. Das Drahtlossignal S₁₁ kann dabei insbesondere eine geplante und/oder aktuelle Beschleunigung des sendenden Fahrzeugs 11 umfassen. Eine Lichtzeichenanlage 1 sendet Drahtlossignale S₁ an beide PKWs 10, 11, um diesen den Zeitraum einer bevorstehenden Grünphase mitzuteilen. Die Vorrichtung 40 zur Beschleunigung des PKWs 10 umfasst eine Auswerteeinheit 3 in Form eines elektronischen Steuergerätes, welche die Signale einer optischen Frontkamera 7, einer Drahtlosempfangseinheit 4 und eines Umgebungssensors 2 erhält und auswertet. Ein elektronischer Datenspeicher 13 ist an die Auswerteeinheit 3 angeschlossen, um den Computerprogramm-Code zur Ausführung eines erfindungsgemäßen Verfahrens bereitzuhalten und heuristische Untersuchungen durch abgespeicherte Daten bezüglich eines Schaltverhaltens der Lichtzeichenanlage 1 zu ermöglichen. Ein Aktuator 5 ist mit einer (nicht dargestellten) Antriebseinheit zur Längsbeschleunigung des PKWs 10 gekoppelt, welche durch die Vorrichtung 40 angesteuert werden kann, sofern der Fahrer den Wunsch einer Teilnahme an der elektronischen Deichsel wünscht oder eine solche Teilnahme von einer anderen Seite veranlasst wird.

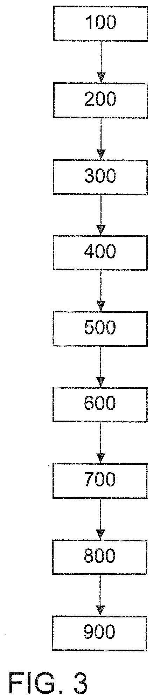

Fig. 3 zeigt Schritte eines Ausführungsbeispiels eines erfindungsgemäßen Verfahrens zur Beschleunigung eines Fahrzeugs bei einem Kolonnenstart an einer Lichtzeichenanlage. In Schritt 100 wird eine Wahrscheinlichkeit dafür, dass ein vordefiniertes Fahrzeug während einer aktuellen oder bevorstehenden Grünphase die Lichtzeichenanlage passieren kann, ermittelt. Hierzu wird in Schritt 200 eine Dauer bis zu einem Ende der aktuellen oder bevorstehenden Grünphase ermittelt. In Schritt 300 wird eine Entfernung des vordefinierten Fahrzeugs (Ego-Fahrzeug) von der Lichtzeichenanlage ermittelt. In Schritt 400 wird eine Kenngröße einer Anzahl zwischen dem vordefinierten Fahrzeug und der Lichtzeichenanlage wartender Fahrzeuge ermittelt. Die Kenngröße kann beispielsweise die Anzahl selbst oder eine die wartenden Fahrzeuge hinsichtlich einer Dauer bis zum Erreichen der Lichtzeichenanlage durch das vordefinierte Fahrzeug repräsentierende Kenngröße sein. In Schritt 500 wird ein Signal eines Umgebungssensors des vordefinierten Fahrzeugs ausgewertet. Mittels dieses Signals kann ein tatsächlicher Beginn einer Grünphase erkannt und ein mit einer aktuellen Tageszeit korrespondierender, im Fortbewegungsmittel gespeicherter Wert repräsentierend die Dauer bzw. das Ende der Grünphase ausgelesen werden. In Schritt 600 wird ein Signal eines Elektronische-Deichsel-Systems eines oder mehrerer zwischen dem vordefinierten Fahrzeug und der Lichtzeichenanlage wartenden Fahrzeugs bzw. Fahrzeuge ausgewertet. Aufgrund einer durch das Signal repräsentierten Beschleunigung kann ermittelt werden, ob eine zügige Anfahrt der vorausfahrenden Fahrzeuge ein Passieren der Grünphase vor deren Ende wahrscheinlich erscheinen lässt. In Schritt 700 wird ein Abbiegevorhaben eines zwischen dem vordefinierten Fahrzeug und der Lichtzeichenanlage befindlichen Fahrzeugs anhand dessen Fahrtrichtungsanzeigers ermittelt und in Schritt 800 Abbiegeoptionen auf einer durch das vordefinierte Fahrzeug aktuell befahrenen Spur ermittelt. Die letzten beiden Erkenntnisse können miteinander dahingehend kombiniert werden, dass im Falle eines erlaubten Abbiegemanövers eine höhere Wahrscheinlichkeit dafür veranschlagt wird, dass der Fahrer des betreffenden Fahrzeugs an seinem Abbiegewunsch festhält. In Schritt 900 wird das Ego-Fahrzeug entsprechend einem Signal eines Elektronische-Deichsel-Systems beschleunigt, sofern die Wahrscheinlichkeit höher als ein vordefinierter Schwellenwert ist und in einem entsprechend geringerem Maße beschleunigt, sofern die Wahrscheinlichkeit geringer als der vordefinierte Schwellenwert ist.

Gemäß der vorliegenden Erfindung kann in einem ersten Schritt die Anzahl der vor dem eigenen Fahrzeug befindlichen Fahrzeuge ermittelt werden. Hierzu kann beispielsweise eine Schätzung erfolgen, die auf einer ermittelten Rückstaulänge vor der Lichtsignalanlage und einer durchschnittlichen Fahrzeuglänge mit Halteabständen (z. B. 6 m) basiert. Im Zuge dessen kann beispielsweise die aktuelle Position des eigenen Fahrzeugs, welche beispielweise durch eine satellitenbasierte Ortung ermittelt werden kann, mit der Position der Lichtzeichenanlage verglichen werden, die entweder aus einer digitalen Straßenkarte bekannt ist oder per V2X-Kommunikation übermittelt wurde. Hierzu wird zunächst ermittelt, dass sich das eigene Fahrzeug mit der Front in einem Abstand von ca. 20 m vor der Lichtsignalanlage bzw. einer dieser zugeordneten Haltelinie befindet. Durch Vergleich mit einer bekannten, durchschnittlichen Fahrzeuglänge von beispielsweise 6 m wird eine Anzahl von drei Fahrzeugen vor dem eigenen Fahrzeug geschätzt. Durch die Verwendung einer durchschnittlichen Fahrzeuglänge kann es bei Vorliegen eines LKWs zu einer Überschätzung der Fahrzeuganzahl kommen. Da ein LKW jedoch in der Regel langsamer anfährt als ein PKW, wird sich die Überschätzung der Fahrzeuganzahl nicht sehr stark bemerkbar machen. Anschließend wird die Information empfangen, dass sich vor dem eigenen Fahrzeug im eigenen Fahrstreifen ein Fahrzeug befindet, das mit einer Vorrichtung zur Fahrzeug-zu-Fahrzeug-Kommunikation ausgerüstet ist. Entsprechend wird in einem dritten Schritt eine Bewertung durchgeführt, ob ein zügiges Anfahren oder ein normales Anfahren als zweckdienlich erscheint. Hierzu wird zunächst ein Zeitwert ermittelt, der die voraussichtliche Zeit bis zum Passieren der Lichtsignalanlage repräsentiert. Dabei kann dieser Zeitwert beispielsweise dadurch ermittelt werden, dass in Abhängigkeit einer Anzahl kommunizierender Fahrzeuge vor dem eigenen Fahrzeug und einer Anzahl nicht-kommunizierender Fahrzeuge vor dem eigenen Fahrzeug, die an der Lichtsignalanlage warten, ein vorbestimmter Wert einer Tabelle entnommen wird. Dieser Zeitwert für die voraussichtliche Dauer bis zum Passieren der Lichtsignalanlage durch das eigene Fahrzeug wird sodann mit einem Wert für die voraussichtliche Dauer der Grünphase der Lichtsignalanlage verglichen, der beispielsweise durch die Lichtsignalanlage über eine drahtlose Kommunikation an die an ihr wartenden kommunizierenden Fahrzeuge übermittelt wird. Alternativ können die entsprechenden Werte auch über einen Back-End-Server zur Verfügung gestellt werden. In Abhängigkeit der Anzahl kommunizierender Fahrzeuge kann auch die Anzahl elektronischer Deichseln und entsprechend die Anzahl in herkömmlicher Weise zueinander beabstandet startender Fahrzeuge ermittelt und zur Grundlage des Zeitwertes bis zum Erreichen der Lichtsignalanlage gemacht werden. In Abhängigkeit des vorbeschriebenen Vergleiches wird nun bestimmt, ob ein erster Modus oder ein zweiter Modus für das Anfahren gewählt werden soll. Dabei kann bevorzugt der erste Modus dann ausgewählt werden, wenn die voraussichtliche Dauer bis zum Passieren der Lichtsignalanlage kleiner als die voraussichtliche Dauer der Grünphase ist. Überschreitet die voraussichtliche Dauer bis zum Passieren der Lichtsignalanlage hingegen die voraussichtliche Dauer bis zum Ende der Grünphase, wird ein zweiter Modus (normales Anfahren) ausgewählt.

In einem weiteren Schritt erfolgt das Anfahren aus dem Stand mit Hilfe einer Abstandsregelung in Abhängigkeit der Tatsache, ob der erste oder der zweite Modus aktiv ist. Ist der erste Modus aktiv, kann beispielsweise eine Abstandsregelung durch zwei verschiedene Maßnahmen reaktiver gemacht werden, nämlich dadurch, dass eine Proportionalität der Beschleunigung des eigenen Fahrzeugs zu einer Geschwindigkeitsdifferenz zum vorausfahrenden Fahrzeug im Vergleich zum normalen Beschleunigungswert erhöht und/oder dass eine Proportionalität der Beschleunigung des eigenen Fahrzeugs zu einer Abweichung des Abstandes zu einem vorausfahrenden Fahrzeug zu einem Soll-Abstand zu einem vorausfahrenden Fahrzeug im Vergleich zum normalen Beschleunigungswert erhöht wird, und/oder dass eine Beschleunigung eines unmittelbar vorausfahrenden Fahrzeugs, das (auch) über eine Vorrichtung zur Fahrzeug-zu-Fahrzeug-Kommunikation verfügt, zur Vorsteuerung der Beschleunigung des eigenen Fahrzeugs verwendet wird. In einer ferner bevorzugten Ausführung kann zwischen drei Beschleunigungsarten ausgewählt werden, wobei neben dem ersten Modus ("zügiges Anfahren") und dem zweiten Modus ("normales Anfahren") ein dritter Modus ("langsames Anfahren") zur Verfügung steht, wobei dieser dritte Modus dann ausgewählt wird, wenn eine voraussichtliche Zeit zum Erreichen der Lichtsignalanlage die voraussichtliche Zeit der Grünphase deutlich übersteigt und wobei dieser dritte Modus dadurch gekennzeichnet ist, dass eine Reaktivität der Abstandsregelung verringert wird, nämlich beispielsweise dadurch, dass eine Proportionalität der Beschleunigung des eigenen Fahrzeugs zu einer Geschwindigkeitsdifferenz zum vorausfahrenden Fahrzeug im Vergleich zum normalen Modus verringert wird und/oder dadurch, dass eine Proportionalität der Beschleunigung des eigenen Fahrzeugs zu einer Abweichung des Abstandes zu einem vorausfahrenden Fahrzeug zu einem Soll-Abstand zu einem vorausfahrenden Fahrzeug im Vergleich zum normalen Modus verringert wird. Alternativ oder zusätzlich kann auch eine nicht-stufenweise, sondern stufenlose Adaption einer Abstandsregelung an eine Verkehrssituation in Abhängigkeit der Bewertung eines Rückstaus vor einer Lichtsignalanlage erfolgen.

In vorteilhafter Weise kann durch die vorliegende Erfindung die Akzeptanz eines automatischen Ampelstarts erhöht werden. Daneben kann die Verkehrseffizienz gesteigert werden, indem durch ein zügiges Anfahren aus dem Stand an einer Lichtsignalanlage die Anzahl der Fahrzeuge, die bei Grün die Ampel passieren, erhöht werden kann. Dabei wird in besonders vorteilhafter Weise berücksichtigt, ob ein Passieren der Ampel während der aktuellen Grünphase zu erwarten ist und nur in diesem Fall ein reaktiverer Anfahrmodus gewählt, der beispielsweise eine Beschleunigung eines vorausfahrenden, kommunizierenden Fahrzeugs zur Vorsteuerung der Abstandsregelung verwenden kann. Ist hingegen nicht zu erwarten, dass das eigene Fahrzeug die Lichtsignalanlage während der aktuellen Grünphase passiert, wird ein solcher reaktiver Anfahrmodus nicht gewählt, und es werden unnötige Beschleunigungs- und Bremsspitzen vermieden, die sich negativ auf Komfort und Energiebedarf auswirken, und dabei ohne Effekt auf die Verkehrseffizienz sind. Daneben kann durch das beschriebene Verfahren die Akzeptanz eines automatischen Ampelstarts erhöht werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Lichtzeichenanlage
- 2: Umgebungssensor
- 3: Auswerteeinheit/elektronisches Steuergerät
- 4: Sende-/Empfangseinheit
- 5: Aktuator
- 6: Fahrtrichtungsanzeiger
- 7: optische Kamera
- 8: Radweg
- 9: Radfahrer
- 10: Ego-Fahrzeug
- 11, 12: Fremd-Fahrzeug
- 13: Datenspeicher
- 20, 21, 22, 30, 31, 32: Fremd-Fahrzeug
- 40: Vorrichtung
- 100-900: Verfahrensschritte
- A, B, C: Fahrspuren
- d: Abstand des Ego-Fahrzeugs von der Lichtzeichenanlage
- S₁, S₁₁, S₁₂, S₂₂: Drahtloskommunikationssignale

## Patentansprüche

1. Verfahren zur Beschleunigung eines Fahrzeugs (10) an einer Lichtzeichenanlage (1) umfassend die Schritte:
- Ermitteln (100) einer Wahrscheinlichkeit, dass das Fahrzeug (10) während einer aktuellen oder bevorstehenden Grünphase die Lichtzeichenanlage (1) passieren kann,
- Beschleunigen (900) des Fahrzeugs (10) entsprechend einem Signal (S₁, S₁₁, S₁₂, S₂₂) eines Elektronische-Deichsel-Systems, sofern die Wahrscheinlichkeit höher als ein vordefinierter Schwellenwert ist und
- Beschleunigen (900) des Fahrzeugs (10) in geringerem Maße, sofern die Wahrscheinlichkeit geringer als der vordefinierte Schwellenwert ist,
**dadurch gekennzeichnet, dass** das Ermitteln der Wahrscheinlichkeit umfasst:
- Auswerten (600) von Signalen (S₁₁, S₁₂) eines Elektronische-Deichsel-Systems mehrerer zwischen dem Fahrzeug (10) und der Lichtzeichenanlage (1) wartenden Fahrzeuge (11, 12) und
- Beschleunigen des Fahrzeugs (10) entsprechend einem unter den Signalen (S₁₁, S₁₂) eine geringste Beschleunigung repräsentierenden Signals (S₁₂), sofern die Wahrscheinlichkeit höher als ein vordefinierter Schwellenwert ist, oder
- Beschleunigen des Fahrzeugs (10) entsprechend einer unter den Signalen (S₁₁, S₁₂) gemittelten Beschleunigung, sofern die Wahrscheinlichkeit höher als ein vordefinierter Schwellenwert ist.

2. Verfahren nach Anspruch 1, wobei das Ermitteln der Wahrscheinlichkeit zumindest einen der folgenden Schritte umfasst:
- Ermitteln (200) einer Dauer bis zu einem Ende der aktuellen oder bevorstehenden Grünphase
- Ermitteln (300) einer Entfernung des Fahrzeugs (10) von der Lichtzeichenanlage (1)
- Auswerten (500) eines Signals eines Umgebungssensors (2) des Fahrzeugs (10)
- Auswerten (600) eines Signals (S₁₁, S₁₂) eines Elektronische-Deichsel-Systems eines zwischen dem Fahrzeug (10) und der Lichtzeichenanlage (1) wartenden Fahrzeugs
- Ermitteln (700) eines Abbiegevorhabens eines zwischen dem vordefinierten Fahrzeug (10) und der Lichtzeichenanlage (1) befindlichen Fahrzeugs (11)
- Ermitteln (800) von Abbiegeoptionen auf einer durch das Fahrzeug (10) aktuell befahrenen Spur (C).

3. Verfahren nach einem der vorstehenden Ansprüche, wobei das Beschleunigen des Fahrzeugs (10) aus dem Stand erfolgt.

4. Verfahren nach einem der vorstehenden Ansprüche weiter umfassend
- wobei das Ermitteln der Wahrscheinlichkeit ein Ermitteln einer Dauer der aktuellen oder bevorstehenden Grünphase mittels
- eines von der Lichtzeichenanlage (1) stammenden Signals (S₁), und/oder
- einer fahrzeugbasierten Datenbank erfolgt.

5. Vorrichtung zur Beschleunigung eines Fahrzeugs (10) an einer Lichtzeichenanlage (1) umfassend:
- eine Auswerteeinheit (3),
- eine Empfangseinheit (4), und
- einen Aktuator (5),
- wobei die Auswerteeinheit (3) eingerichtet ist,
- über die Empfangseinheit (4) empfangene Signale (S₁₁) auszuwerten und
- eine Wahrscheinlichkeit dafür, dass ein Fahrzeug (10) während einer aktuellen oder bevorstehenden Grünphase die Lichtzeichenanlage (1) passieren kann, zu ermitteln und
- der Aktuator (5) eingerichtet ist,
- das Fahrzeug (10) entsprechend einem Signal (S₁, S₁₁, S₁₂) eines Elektronische-Deichsel-Systems zu beschleunigen, sofern die Wahrscheinlichkeit höher als ein vordefinierter Schwellenwert ist und
- das Fahrzeug (10) in geringerem Maße zu beschleunigen, sofern die Wahrscheinlichkeit geringer als der vordefinierte Schwellenwert ist, **dadurch gekennzeichnet, dass** die Auswerteeinheit (3) eingerichtet ist:
- Signale (S₁₁, S₁₂) eines Elektronische-Deichsel-Systems mehrerer zwischen dem Fahrzeug (10) und der Lichtzeichenanlage (1) wartenden Fahrzeuge (11, 12) auszuwerten und
- das Fahrzeug (10) entsprechend einem unter den Signalen (S₁₁, S₁₂) eine geringste Beschleunigung repräsentierenden Signals (S₁₂), sofern die Wahrscheinlichkeit höher als ein vordefinierter Schwellenwert ist, zu beschleunigen oder
- das Fahrzeug (10) entsprechend einer unter den Signalen (S₁₁, S₁₂) gemittelten Beschleunigung, sofern die Wahrscheinlichkeit höher als ein vordefinierter Schwellenwert ist, zu beschleunigen.

6. Vorrichtung nach Anspruch 5, wobei die Vorrichtung eingerichtet ist, ein Verfahren nach einem der vorstehenden Ansprüche 2 bis 4 auszuführen.

7. Vorrichtung nach einem der vorstehenden Ansprüche 5 oder 6, wobei die Empfangseinheit (4) eingerichtet ist,
- eine Dauer bis zu einem Ende der aktuellen oder bevorstehenden Grünphase zu ermitteln und/oder
- eine Entfernung des Fahrzeugs (S₁₀) von der Lichtzeichenanlage (1) zu ermitteln und/oder
- ein Signal eines Umgebungssensors (2) des Fahrzeugs (10) auszuwerten und/oder
- ein Signal (S₁₁, S₁₂) eines Elektronische-Deichsel-Systems eines zwischen dem Fahrzeug (10) und der Lichtzeichenanlage (1) wartenden Fahrzeugs auszuwerten und/oder
- ein Abbiegevorhaben eines zwischen dem Fahrzeug (10) und der Lichtzeichenanlage (1) befindlichen Fahrzeugs (11) zu ermitteln.

8. Vorrichtung nach einem der vorstehenden Ansprüche 5, 6 oder 7, wobei die Empfangseinheit (4) eingerichtet ist,
- Abbiegeoptionen auf einer durch das Fahrzeug (10) aktuell befahrenen Spur (C) zu ermitteln und die Auswerteeinheit (3) eingerichtet ist,
- ein Abbiegevorhaben eines zwischen der Lichtzeichenanlage (1) und dem Fahrzeug (10) wartenden Fahrzeugs (11), insbesondere in Abhängigkeit der ermittelten Abbiegeoptionen, auszuwerten.

9. Computerprogrammprodukt umfassend Instruktionen, welche, wenn sie auf einer programmierbaren Auswerteeinheit (3) einer Vorrichtung (1) nach einem der Ansprüche 5 bis 8 ausgeführt werden, die Auswerteeinheit (3) veranlassen, die Schritte eines Verfahrens nach einem der Ansprüche 1 bis 4 durchzuführen.

10. Signalfolge repräsentierend Instruktionen, welche, wenn sie auf einer programmierbaren Auswerteeinheit (3) einer Vorrichtung (1) nach einem der Ansprüche 5 bis 8 ausgeführt werden, die Auswerteeinheit (3) veranlassen, die Schritte eines Verfahrens nach einem der Ansprüche 1 bis 4 durchzuführen.

11. Fortbewegungsmittel umfassend eine Vorrichtung nach einem der vorstehenden Ansprüche 5 bis 8.

## Claims

1. Method for accelerating a vehicle (10) at a traffic light system (1), the method comprising the steps of:
- determining (100) a probability that the vehicle (10) can pass the traffic light system (1) during a current or upcoming green phase,
- accelerating (900) the vehicle (10) according to a signal (S₁, S₁₁, S₁₂, S₂₂) of an electronic drawbar system, if the probability is higher than a predefined threshold and
- accelerating (900) the vehicle (10) to a lesser extent, if the probability is less than the predefined threshold,
**characterized in that** determining the probability comprises:
- evaluating (600) signals (S₁₁, S₁₂) of an electronic drawbar system of a plurality of vehicles (11, 12) waiting between the vehicle (10) and the traffic light system (1) and
- accelerating the vehicle (10) according to a signal (S₁₂) representing a minimum acceleration among the signals (S₁₁, S₁₂), if the probability is higher than a predefined threshold, or
- accelerating the vehicle (10) according to an acceleration averaged among the signals (S₁₁, S₁₂) , if the probability is higher than a predefined threshold.

2. Method according to claim 1, wherein determining the probability comprises at least one of the following steps:
- determining (200) a duration until the end of the current or upcoming green phase
- determining (300) a distance of the vehicle (10) from the traffic light system (1)
- evaluating (500) a signal of an environment sensor (2) of the vehicle (10)
- evaluating (600) a signal (S₁₁, S₁₂) of an electronic drawbar system of a vehicle waiting between the vehicle (10) and the traffic light system (1)
- determining (700) a turning intention of a vehicle (11) located between the predefined vehicle (10) and the traffic light system (1)
- determining (800) turning options in a lane (C) currently traveled in by the vehicle (10).

3. Method according to any of the preceding claims, wherein the vehicle (10) is accelerated from a standstill.

4. Method according to any of the preceding claims, further comprising
- wherein determining the probability determining a duration of the current or upcoming green phase takes place by means of
- a signal (S₁) originating from the traffic light system (1), and/or
- a vehicle-based database.

5. Device for accelerating a vehicle (10) at a traffic light system (1), the device comprising:
- an evaluation unit (3),
- a receiving unit (4), and
- an actuator (5),
- the evaluation unit (3) being designed to
- evaluate signals (S₁₁) received via the receiving unit (4) and
- determine a probability that a vehicle (10) can pass the traffic light (1) during a current or upcoming green phase, and
- the actuator (5) being designed to
- accelerate the vehicle (10) according to a signal (S₁, S₁₁, S₁₂) of an electronic drawbar system, if the probability is higher than a predefined threshold and
- accelerate the vehicle (10) to a lesser extent if the probability is less than the predefined threshold, **characterized in that** the evaluation unit (3) is designed to:
- evaluate signals (S₁₁, S₁₂) of an electronic drawbar system of a plurality of vehicles (11, 12) waiting between the vehicle (10) and the traffic light system (1) and
- accelerate the vehicle (10) according to a signal (S₁₂) representing a minimum acceleration among the signals (S₁₁, S₁₂), if the probability is higher than a predefined threshold, or
- accelerate the vehicle (10) according to an acceleration averaged among the signals (S₁₁, S₁₂), if the probability of accelerating is higher than a predefined threshold.

6. Device according to claim 5, wherein the device is designed to carry out a method according to any of the preceding claims 2 to 4.

7. Device according to either of the preceding claims 5 or 6, wherein the receiving unit (4) is designed to
- determine a duration until the end of the current or upcoming green phase and/or
- determine a distance of the vehicle (S₁₀) from the traffic light system (1) and/or
- evaluate a signal of an environment sensor (2) of the vehicle (10) and/or
- evaluate a signal (S₁₁, S₁₂) of an electronic drawbar system of a vehicle waiting between the vehicle (10) and the traffic light system (1) and/or
- determine a turning intention of a vehicle (11) located between the vehicle (10) and the traffic light system (1).

8. Device according to any of the preceding claims 5, 6 or 7, wherein the receiving unit (4) is designed to
- determine turning options in a lane (C) currently traveled in by the vehicle (10) and the evaluation unit (3) is designed to
- evaluate a turning intention of a vehicle (11) waiting between the traffic light system (1) and the vehicle (10), in particular depending on the determined turning options.

9. Computer program product comprising instructions which, when executed on a programmable evaluation unit (3) of a device (1) according to any of claims 5 to 8, cause the evaluation unit (3) to carry out the steps of a method according to any of claims 1 to 4.

10. Signal sequence representing instructions which, when executed on a programmable evaluation unit (3) of a device (1) according to any of claims 5 to 8, cause the evaluation unit (3) to carry out the steps of a method according to any of claims 1 to 4.

11. Transportation means comprising a device according to any of the preceding claims 5 to 8.

## Revendications

1. Procédé permettant l'accélération d'un véhicule (10) au niveau d'une installation de signalisation lumineuse (1), comprenant les étapes de :
- détermination (100) d'une probabilité que le véhicule (10) puisse passer l'installation de signalisation lumineuse (1) pendant une phase verte actuelle ou imminente,
- accélération (900) du véhicule (10) en fonction d'un signal (S₁, S₁₁, S₁₂, S₂₂) d'un système de convoi électronique, pour autant que la probabilité est supérieure à une valeur seuil prédéfinie, et
- accélération (900) du véhicule (10) dans une moindre mesure, pour autant que la probabilité est inférieure à la valeur seuil prédéfinie,
**caractérisé en ce que** la détermination de la probabilité comprend :
- l'évaluation (600) de signaux (S₁₁, S₁₂) d'un système de convoi électronique de plusieurs véhicules (11, 12) en attente entre le véhicule (10) et l'installation de signalisation lumineuse (1), et
- l'accélération du véhicule (10) en fonction d'un signal (S₁₂) représentant une accélération moindre parmi les signaux (S₁₁, S₁₂), pour autant que la probabilité est supérieure à une valeur seuil prédéfinie, ou
- l'accélération du véhicule (10) selon une accélération moyennée parmi les signaux (S₁₁, S₁₂), pour autant que la probabilité est supérieure à une valeur seuil prédéfinie.

2. Procédé selon la revendication 1, dans lequel la détermination de la probabilité comprend au moins l'une des étapes suivantes :
- détermination (200) d'une durée avant une fin de la phase verte actuelle ou imminente
- détermination (300) d'une distance entre le véhicule (10) et l'installation de signalisation lumineuse (1)
- évaluation (500) d'un signal d'un capteur d'environnement (2) du véhicule (10)
- évaluation (600) d'un signal (S₁₁, S₁₂) d'un système de convoi électronique d'un véhicule en attente entre le véhicule (10) et l'installation de signalisation lumineuse (1)
- détermination (700) d'une intention de virage d'un véhicule (11) se trouvant entre le véhicule (10) prédéfini et l'installation de signalisation lumineuse (1)
- détermination (800) d'options de virage sur une voie (C) actuellement empruntée par le véhicule (10).

3. Procédé selon l'une des revendications précédentes, dans lequel l'accélération du véhicule (10) est effectuée à partir de l'arrêt.

4. Procédé selon l'une des revendications précédentes, comprenant en outre
- dans lequel la détermination de la probabilité une détermination d'une durée de la phase verte actuelle ou imminente est effectuée au moyen de
- un signal (S₁) provenant de l'installation de signalisation lumineuse (1), et/ou
- une base de données basée sur les véhicules.

5. Dispositif permettant l'accélération d'un véhicule (10) au niveau d'une installation de signalisation lumineuse (1), comprenant :
- une unité d'évaluation (3),
- une unité de réception (4), et
- un actionneur (5),
- dans lequel l'unité d'évaluation (3) est configurée pour
- évaluer les signaux (S₁₁) reçus par l'intermédiaire de l'unité de réception (4), et
- déterminer une probabilité qu'un véhicule (10) puisse passer l'installation de signalisation lumineuse (1) pendant une phase verte actuelle ou imminente, et
- l'actionneur (5) est configuré pour
- faire accélérer le véhicule (10) en fonction d'un signal (S₁, S₁₁, S₁₂) d'un système de convoi électronique, pour autant que la probabilité est supérieure à une valeur seuil prédéfinie, et
- faire accélérer le véhicule (10) dans une moindre mesure, pour autant que la probabilité est inférieure à la valeur seuil prédéfinie,
**caractérisé en ce que** l'unité d'évaluation (3) est configurée pour :
- évaluer des signaux (S₁₁, S₁₂) d'un système de convoi électronique de plusieurs véhicules (11, 12) en attente entre le véhicule (10) et l'installation de signalisation lumineuse (1), et
- faire accélérer le véhicule (10) en fonction d'un signal (S₁₂) représentant une accélération moindre parmi les signaux (S₁₁, S₁₂), pour autant que la probabilité est supérieure à une valeur seuil prédéfinie, ou
- faire accélérer le véhicule (10) en fonction d'une accélération moyennée parmi les signaux (S₁₁, S₁₂), pour autant que la probabilité est supérieure à une valeur seuil prédéfinie.

6. Dispositif selon la revendication 5, dans lequel le dispositif est configuré pour exécuter un procédé selon l'une des revendications précédentes 2 à 4.

7. Dispositif selon l'une des revendications précédentes 5 à 6, dans lequel l'unité de réception (4) est configurée pour
- déterminer une durée avant une fin de la phase verte actuelle ou imminente, et/ou
- déterminer une distance entre le véhicule (S₁₀) et l'installation de signalisation lumineuse (1), et/ou
- évaluer un signal d'un capteur d'environnement (2) du véhicule (10), et/ou
- évaluer un signal (S₁₁, S₁₂) d'un système de convoi électronique d'un véhicule en attente entre le véhicule (10) et l'installation de signalisation lumineuse (1), et/ou
- déterminer une intention de virage d'un véhicule (11) se trouvant entre le véhicule (10) et l'installation de signalisation lumineuse (1).

8. Dispositif selon l'une des revendications précédentes 5, 6 ou 7, dans lequel l'unité de réception (4) est configurée pour
- déterminer des options de virage sur une voie (C) actuellement empruntée par le véhicule (10), et l'unité d'évaluation (3) est configurée pour
- évaluer une intention de virage d'un véhicule (11) en attente entre l'installation de signalisation lumineuse (1) et le véhicule (10), en particulier en fonction des options de virage déterminées.

9. Produit-programme informatique comprenant des instructions qui, lorsqu'elles sont exécutées sur une unité d'évaluation (3) programmable d'un dispositif (1) selon l'une des revendications 5 à 8, amènent l'unité d'évaluation (3) à exécuter les étapes d'un procédé selon l'une des revendications 1 à 4.

10. Suite de signaux représentant des instructions qui, lorsqu'elles sont exécutées sur une unité d'évaluation (3) programmable d'un dispositif (1) selon l'une des revendications 5 à 8, amènent l'unité d'évaluation (3) à exécuter les étapes d'un procédé selon l'une des revendications 1 à 4.

11. Moyen de locomotion comprenant un dispositif selon l'une des revendications précédentes 5 à 8.
